Europäisches Patentamt

European Patent Office

Office européen des brevets

(11) Publication number: **0 350 089**
**A2**

# EUROPEAN PATENT APPLICATION

(21) Application number: 89201612.2

(22) Date of filing: 20.06.89

(51) Int. Cl.⁴ **G01B 5/20 , G01B 5/00**

(30) Priority: 06.07.88 SE 8802524

(43) Date of publication of application:
**10.01.90 Bulletin 90/02**

(34) Designated Contracting States:
**DE ES FR GB IT**

(71) Applicant: **CAR-O-LINER AB**
**Box 7**
**S-73600 Kungsör(SE)**

(72) Inventor: **Bergström, Hans Roar**
**Blomstervägen 2**
**S-736 00 Kungsör(SE)**
Inventor: **Lindblom, Jonny**
**Noachsgatan 3A**
**S-633 41 Eskilstuna(SE)**

(74) Representative: **Nydell, Peder**
**Nydells Patentbyra Storgatan 57**
**S-392 31 Kalmar(SE)**

(54) **Measuring device having an articulated arm carrying a measuring location sensor.**

(57) A measuring device having an articulated arm (9, 10) carrying a measuring location sensor (12) for measuring the location of selected check points of a damaged vehicle chassis (4) which is secured to a horizontally oriented support frame (3), and which chassis is subjected to straightening and alignment forces, the measuring device having a carriage (5) which can be displaced with respect to a measuring bridge (1b-d), the arm (9, 10) being connected to the carriage. The measuring bridge (1b-d) has measuring rods (18a-b) capable of, when desired, engaging the chassis so that the measuring bridge will be conveyed by the chassis, if this will move due to the straightening or alignment forces.

FIG. 1

## Measuring device having an articulated arm carrying a measuring location sensor

TECHNICAL FIELD

The present invention relates to a measuring device having an articulated arm carrying a measuring location sensor for measuring the location of selected check points in a damaged vehicle chassis which is secured to a horisontally oriented support frame, and which chassis is subjected to straightening and alignment forces, the measuring device having a base, to which a first end of the arm is pivotally connected for rotation about a vertical axis, a second end of the arm carrying the measuring location sensor, the arm comprising at least two arm members which are pivotally connected one to another in sequence.

BACKGROUND PRIOR ART

Known measuring devices having articulated arms, see for instance GB-A-1 498 009, have hitherto not been able to measure the position of check points in a vehicle chassis since this would require so long arms that elastic bendings of the long self-supporting arms would give rise to measuring uncertainties and measuring errors. If, one the other hand, one should try to construct the arms so stabile that any elastic bendings were minimized, this would mean that the arms would be so bulky that the mobility would be substantially obstructed and it would even be impossible to reach all check points of the chassis.

SUMMARY OF THE INVENTION

Accordingly, the object of this invention is to provide a measuring device of the aforesaid kind where the arm has a very good mobility, and where any risk of measuring errors due to said bendings will be totally eliminated.

This object is achieved with a measuring device according to the invention having the features set forth in the characterizing clause of Claim 1.

According to the invention the measuring device is provided with an elongated measuring bridge which is displaceable with respect to the support frame, the base being in the form of a carriage or a slide which is displaceable with respect to the measuring bridge such that the articulated arm will be conveyed by the carriage or slide if this is displaced with respect to the measuring bridge.

Accordingly, the articulated arm is, by means of the carriage or slide, displaceable along the chassis such that the measuring location sensor of the articulated arm can measure the location of for instance three selected check points in the chassis, which three points define a mathematic definition of the location of the chassis with respect to the measuring bridge, i.e. a calibration of the position of the measuring bridge. According to a special embodiment this calibration need not be repeated if the measuring bridge would be put out of place during the alignment work. According to this special embodiment, see Claim 2, the measuring bridge is provided with measuring rods capable of detecting the position of two selected undamaged check points of the chassis, the measuring rods being capable of engaging the chassis such that the measuring bridge will be conveyed by the chassis if this moves due the straightening or alignment forces. By this way there will be no need to again calibrate the measuring device if this would be put out of place during the alignment work.

Further developments of the invention will be apparent from the depending Claims 3-5.

BRIEF DESCRIPTION OF THE DRAWINGS

The invention will be described in more detail with reference to the accompanying drawings, which illustrate a preferred embodiment.

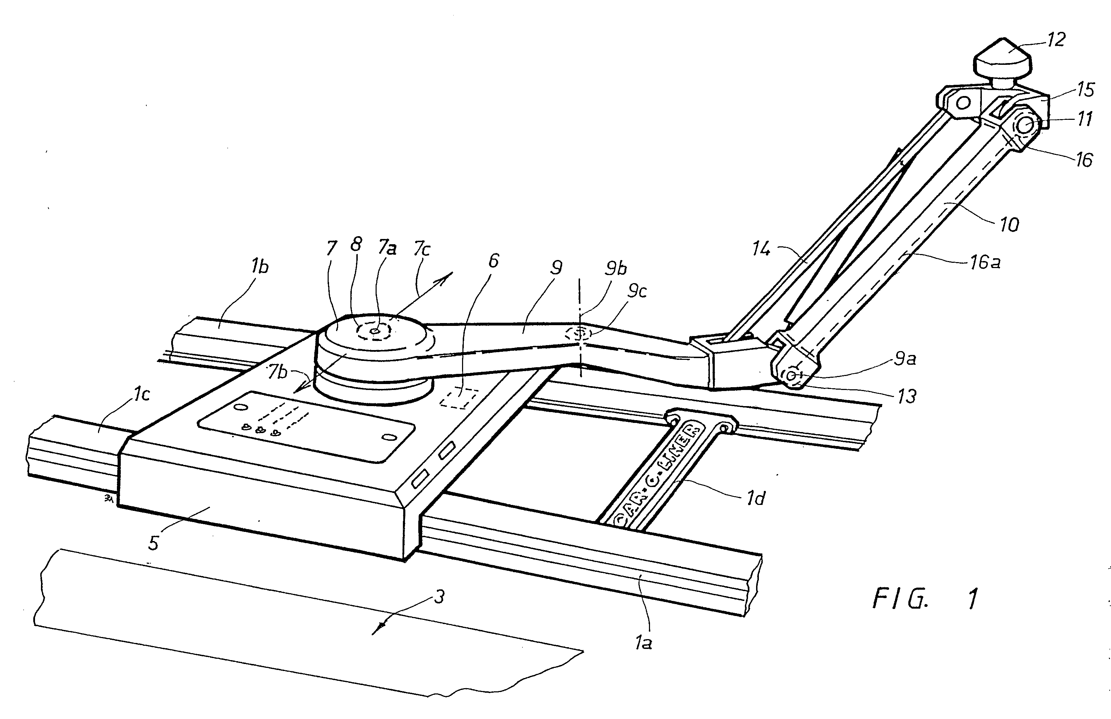

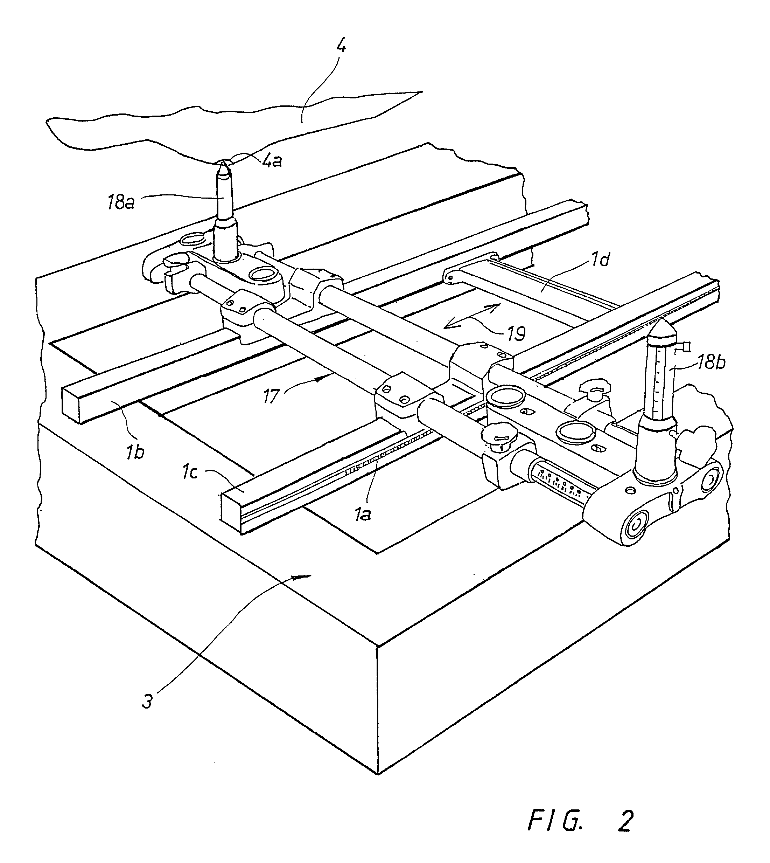

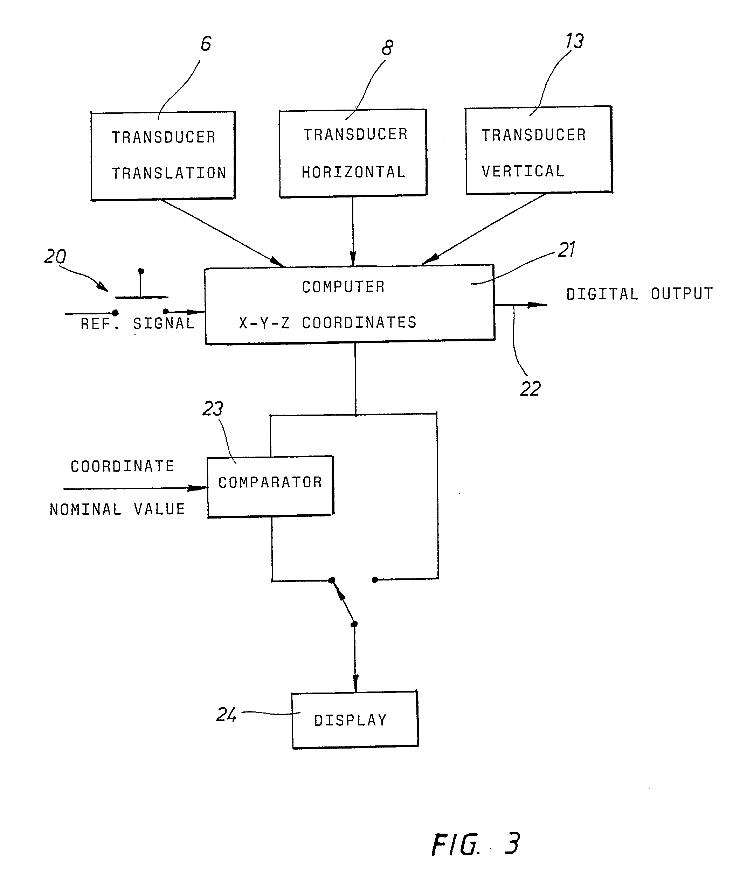

Figure 1 is a first perspective view of a measuring device in accordance with the invention, illustrating the articulated arm of the measuring device. Figure 2 is a second perspective view of a measuring device in accordance with the invention, illustrating the measuring bridge of the measuring device. Figure 3 is a block diagram illustrating various treatments of the measurements made possible by the measuring device according to the invention.

DESCRIPTION OF A PREFERRED EMBODIMENT

In Figure 1 and 2 there is shown a portion of two elongated horizontally adjustable parallel straight beams 1b and 1c of steel or the like, having measuring tapes 1a and being interconnected by a number of cross-members in the form of beams 1d. The beams 1b-d thus form a measuring bridge in the form of an elongated ladder structure which can be loosely placed on the support frame and freely displaced along this both longitudinally and transversely, such that it can be oriented in a desired location on the support frame 3, which frame may for instance consist of a straightening bench which may in a conventional way be provided which chassis clamps (not shown) for holding a damaged vehicle chassis, a portion of which being shown schematically by reference numeral 4 in Figure 2.

The ladder structure 1b-d forms an elongated support means for a measuring carriage in the form of a metallic rectangular carriage or wheel-slide 5 (see Figure 1) which can be displaced by means of wheels (not shown) along the beams 1b-c in the longitudinal direction thereof. The displacement along the beams 1b-c of the slide 5 with respect to a starting position (not shown) is detected by a schematically depicted displacement transducer ("translation") 6 being mounted on the slide 5. The displacement transducer 6 may for instance be a so-called Digiruler of the Japanese trademark Sony with a digital counter of the type NA-20 and a reading pick-up of the type PH51.PH61, the measuring scale of which being for instance a magnetic scale of the type SL 31, which is mounted along the measuring beams.

A pivotable house 7 is mounted at the top of the slide 5 for rotation in a horizontal plane about a vertical axis 7a. A schematically depicted angle transducer 8 ("horizontal") is mounted about the axis 7a for detecting the angular position in the horizontal plane of the pivotable house, below referred to as "the first angle", with respect to a starting position, not shown.

According to an alternative embodiment the pivotable house 7 may be displaceable transversely with respect to the slide 5, as is depicted by arrows 7b and 7c.

The pivotable house 7 is rigidly connected to an elongated metallic measuring arm member 9 such that this will be conveyed by the pivotable house 7 when this is rotated.

The free end of the arm member 9 is via a pivot 9a pivotally connected to a second arm member 10, the free end of which carries, via a pivot 11, a holder 15 for a measuring location sensor 12, for instance a measuring probe.

A schematically depicted angle transducer 13 ("vertical") is mounted about the pivot 11 for detecting the angular position in the vertical plane of the arm member 10, below referred to as "the second angle", with respect to a starting position, not shown. Both the transducer 8 and the transducer 13 may be of a so-called incremental miniature angle transducer type with 0-pulse of photoelectric type, for instance of the type sold by the Swedish company Leine & Linde AB (address: P.O. Box 8, S-645 21 Strängnäs, Sweden) and having the model No. 25 or 63.

According to an alternative schematically illustrated embodiment of the invention, the first arm member 9 is composed by two arm elements pivotally connected to each other via a schematically depicted vertical pivot 9b, which allows the two arm elements to be rotated with respect to each other in the horizontal plane. This necessitates not only the two transducers 8 and 13 but also an additional schematically depicted angle transducer 9c for detecting the magnitude of rotation about the pivot 9b. Thus, the resulting magnitude of the rotation of the measuring location sensor 12 will be the sum of the measurements of three different transducers.

Since the transducers 6, 8 and 13 and the additional transducer 9c are all of known type and it is obvious for the man skilled in the art how they are to be adapted in the measuring device according to the invention, they are not shown or described in more detail.

The measuring location sensor 12 is provided with a power means capable of rotating the measuring location sensor about the pivot 11 so that the measuring location sensor is always held in a predetermined orientation, preferably in a permanent vertical orientation, irrespectively of the angular orientation of the arm member 10.

In the embodiment shown in Figure 1, the power means comprises a link means 14 which is syngone-coupled to the arm member 10 in such a way that the arm member 10 and link 14 will be spaced somewhat from each other but will always be held in one and the same angular position, the measuring location sensor 12 being pivotally connected, via a holder 15, to both the pivot 11 and the link 14, such that it will always be vertically oriented, irrespectively of the angular position of the arm member 10. Since such syngone couplings are known per se in other appliances, they need not be described or shown in further detail.

According to an alternative embodiment the power means is in the form of a schematically depicted servo motor 16, which is journalled about the pivot 11, and which, via a schematically depicted electric conductor 16a, will receive impulses from the transducer 13 for rotating the holder 15, such that the measuring location sensor 12 will always have a vertical orientation, irrespectively of the angular position of the arm member 10.

The movement of the slide 5, the pivotable house 7 and the arm member 10, can be performed either manually by an operator, or by power means in a way not shown. The arm member 10 is, in both cases, provided with a gas spring which is biased to hold the measuring location sensor 12 under pressure against a selected measuring point in the chassis.

When reading the position of the measuring location sensor mechanically, it is obvious that the measuring location sensor can be designed such that it will itself indicate when it is in a reading position.

In Figure 2 the measuring bridge 1b-d is loosely placed upon the support frame 4. The measuring bridge 1b-d is provided with at least two measuring slides 17, known per se, only one of which being shown. The measuring slides each carries two vertically oriented, longitudinally displaceable mutually alike measuring rods 18a-b, the free end of each rod being designed as a measuring pin, the other end of each rod being designed to mate with a selected one of three holes in the slide. The slide 17 can be displaced transversely along the measuring bridge 1b-d, i.e. in the direction of the arrow 19 in Figure 2.

When the measuring device is to be used, the two measuring rods 18a-b of the measuring slides are first displaced such that the measuring pin of at least two of them will come into an operative engagement with, i.e. will be hooked into a respective selected undamaged check point (measuring point) of the chassis 4. Such check points are usually in the form of holes 4a or the like in the chassis, in which holes the measuring pins may be inserted into a locking engagement with the chassis.

The location of the two measuring pins are detected, and the corresponding information is sent, via a switch 20, to a computer 21 (see Figure 3). Then the measuring location sensor 12 may be moved to selected, damaged or undamaged check points (measuring points) in the chassis for measuring the locations thereof and for comparison with nominal values registered on data sheets.

Since the measuring pins of the measuring rods are in engagement with two selected, undamaged check points in the chassis, the measuring pins will constitute operative engagement means which will convey the measuring bridge together with the chassis, if this will move as a result of the alignment work. No new calibration of the measuring device will, therefore, be needed, if the measuring bridge will be put out of place as a result of any movement of the chassis.

Accordingly, the measuring rods 18a-b will constitute measuring means for measurement of the location of undamaged check points of the chassis, and will also constitute engagement means capable of making an engagement with the chassis 4 in such a way that the measuring bridge will be conveyed by the chassis if this will move during the alignment work.

It is obvious that alternative, not shown, engagement means than the measuring rods 18a-b may be used. It is also obvious that the above pre-measurement of two undamaged check points in the chassis can, alternatively, be performed by means of the arm 9, 10.

In the embodiment shown in Figures 1 and 2, the measuring bridge rests loosely upon the top side of the support frame 3. According to an alternative embodiment, not shown, the measuring bridge may alternatively be suspended in the above undamaged check points of the chassis, for instance by means of suitable hooking of the engagement means 18a-b in a way known per se, into corresponding check points. In this alternative embodiment the measuring bridge will consequently be somewhat spaced above the support frame 3.

In Figure 3 there is shown how the various transducers 6, 8 and 13 of the embodiment shown in Figures 1-2 supply their measurements to the computer 21 for conversion into cartesian coordinates based on the x, y and z axes. The switch 20 is, thereby, adapted to generate a reference signal to the computer 21 in order to relate the x, y and z coordinates to a predetermined zero-value.

The computer 21 has a digital output 22 for giving the operator an x-y-z-value of the spatial location of the measuring location sensor. Accordingly, the operator may compare this value with a corresponding nominal value shown on a data sheet for the actual chassis. The x-y-z-values of the computer 21 may also be sent to a comparator 23 for comparing with nominal values, whereby a display means 24 is provided to give a visual information of any differences between the actual and nominal values of the measuring point.

## Claims

1. A measuring device having an articulated arm (9, 10) carrying a measuring location sensor (12) for measuring the location of selected check points in a damaged vehicle chassis (4) which is secured to a horizontally oriented support frame (3), and which chassis is subjected to straightening and alignment forces, the measuring device having a base (5), to which a first end of the articulated arm is pivotally connected for rotation about a vertical axis (7a), a second end of the articulated arm carrying the measuring location sensor, the arm comprising at least two arm members (9, 10) which are pivotally connected one to another in sequence, **characterized** in that the measuring device is provided with an elongated measuring bridge (1b-d) which is displaceable with respect to the support frame (3), the base (5) being in the form of a carriage or a slide which is displaceable with respect to the measuring bridge such that the articulated arm will be conveyed by the carriage or slide if this is displaced with respect to the measuring bridge.

2. A measuring device according to Claim 1, **characterized** in that the measuring bridge is provided with at least two measuring rods (18a-b) capable of detecting the position of two selected undamaged check points of the chassis (4), the measuring rods being capable of engaging the chassis (4) such that the measuring bridge will be conveyed by the chassis if this moves due to the straightening or alignment forces.

3. A measuring device according to any preceding Claim, **characterized** in that the measuring bridge (1b-d) is in the form of a ladder structure composed of two parallel beams (1b, c) interconnected by a number of cross-members (1d), the ladder structure being orientable to a desired orientation on the support frame (3).

4. A measuring device according to any of the Claims 1 - 2, **characterized** in that the measuring bridge (1b-d) is displaceable with respect to the support frame (3) both longitudinally and transversely.

5. A measuring device according to any preceding Claim, **characterized** in that the measuring location sensor (12) is, via a pivot (11), connected to said second end of the articulated arm (10) and provided with a power means (14; 16) capable of rotating the measuring location sensor about the pivot such that the measuring location is held in a predetermined, preferably vertical orientation, irrespectively of the angular position of the articulated arm.

FIG. 1

EP 0 350 089 A2

FIG. 2

FIG. 3